(19) Europäisches Patentamt
European Patent Office
Office européen des brevets

(11) **EP 4 209 288 A1**

(12) **EUROPEAN PATENT APPLICATION**
published in accordance with Art. 153(4) EPC

(43) Date of publication:
**12.07.2023 Bulletin 2023/28**

(21) Application number: **21863963.1**

(22) Date of filing: **15.07.2021**

(51) International Patent Classification (IPC):
**B21D 22/00** (2006.01)     **B21D 22/26** (2006.01)

(52) Cooperative Patent Classification (CPC):
**B21D 22/00; B21D 22/26**

(86) International application number:
**PCT/JP2021/026674**

(87) International publication number:
**WO 2022/049905 (10.03.2022 Gazette 2022/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.09.2020   JP 2020147656**

(71) Applicant: **JFE Steel Corporation
Tokyo 100-0011 (JP)**

(72) Inventors:
• **NAKAGAWA, Kinya
Tokyo 100-0011 (JP)**
• **SHINMIYA, Toyohisa
Tokyo 100-0011 (JP)**
• **YAMASAKI, Yuji
Tokyo 100-0011 (JP)**

(74) Representative: **Grünecker Patent- und
Rechtsanwälte
PartG mbB
Leopoldstraße 4
80802 München (DE)**

(54) **METHOD FOR PRODUCING PRESSED COMPONENT, METHOD FOR DESIGNING DIE, DIE SHAPE DESIGNING DEVICE, AND DIE**

(57)     There are provided a method for producing a pressed component and a method for designing a die applicable even when a pressed component shape that cannot be formed without being greatly drawn is produced. A method for producing a pressed component for press forming a metal sheet into a final component shape through two or more press steps including a press step carried out by drawing includes: determining the inflow amount of a material required for forming the metal sheet into the final component shape based on the increase in the cross-sectional line length of the final component shape with respect to the cross-sectional line length of the metal sheet before forming in the press forming of the metal sheet into the final component shape by a single press step; and distributing the determined inflow amount of the material to each step including a final press step, and determining a preformed shape after press forming in steps other than the final press step based on the distributed inflow amount.

FIG. 1

EP 4 209 288 A1

**Description**

Technical Field

The present invention relates to a technology for producing a target pressed component by a plurality of press steps including drawing.

Background Art

From various viewpoints, such as weight reduction, aerodynamic performance, design, and collision safety, the performance required in automobile components has been increasing more and more in recent years. Therefore, there is an increasing demand for the production of component shapes that are difficult to form using common pressing methods. Further, in view of a problem of vehicle prices and problems of resource saving and $CO_2$ reduction, there is a demand for a reduction in materials used in the production of products, i.e., an increase in material yield.

As a method for improving the formability in press forming, methods described in PTL 1 and PTL 2 are mentioned, for example. PTL 1 discloses a technology of improving formability by optimizing the die shape in each step in a plurality of stretch forming steps. PTL 2 makes it possible to drive a local area of a press die as an individual movable punch. PTL 2 discloses a method for preventing forming defects by leading a blank into the die in advance, and then performing forming using the movable punch.

Citation List

Patent Literatures

PTL 1: JP 5867657 B
PTL 2: JP 2007-326112 A

Summary of Invention

Technical Problem

The method described in PTL 1 is directed to stretch forming or drawing-stretch forming with a small inflow amount. However, the method described in PTL 1 is difficult to apply to a component shape that cannot be formed without being greatly drawn. Specifically, the method described in PTL 1 is difficult to apply when forming is performed such that an increase in the line length of the final shape with respect to that in the initial state far exceeds the uniform elongation of the material.

In the method described in PTL 2, the forming is performed while pressurizing a site led by the movable punch in advance. Therefore, material movement or deformation does not occur any more in a pressurized site, and thus the effect is limited. PTL 2 does not disclose a detailed method for designing a die or the setting range of the movable punch, for example.

The present invention has been made in view of the above-described respects. It is an object of the present invention to provide a method for producing a pressed component and a method for designing a die applicable even when a pressed component shape that cannot be formed without being greatly drawn is produced.

Solution to Problem

To solve the problems, one aspect of the present invention is a method for producing a pressed component for press forming a metal sheet into a final component shape through two or more press steps including a press step carried out by drawing, and the method for producing a pressed component includes: determining the inflow amount of a material required for forming the metal sheet into the final component shape based on the increase in the cross-sectional line length of the final component shape with respect to the cross-sectional line length of the metal sheet before forming in the press forming of the metal sheet into the final component shape by a single press step; and distributing the determined inflow amount of the material to each step including a final press step, and determining a preformed shape after press forming in steps other than the final press step based on the distributed inflow amount.

An aspect of the present invention is a method for designing a die used in press forming a metal sheet into a final component shape through two or more press steps including a press step carried out by drawing, and the method for designing a die includes: determining the inflow amount of a material required for forming the metal sheet into the final component shape based on the increase in the cross-sectional line length of the final component shape with respect to the cross-sectional line length of the metal sheet before forming in the press forming of the metal sheet into the final component shape by a single press step; and distributing the determined inflow amount of the material to each step including a final press step, and determining a die shape used in steps other than the final press step based on the distributed inflow amount.

An aspect of the present invention is a die shape designing device for, in press forming a metal sheet into a final component shape through a plurality of press steps, determining a die shape of a die used in each step excluding a final press step, in which, when one step is selected from the plurality of press steps and set as a selection step, a component shape obtained in the selection step is set as a selected component shape, one press step selected from the plurality of press steps and carried out before the selection step is set as a reference step, and the shape of the metal sheet before press forming in the reference step is set as a reference shape, the press steps from the reference step to the selection step include a press step having drawing, and the die shape designing device includes: a cross section setting unit configured to set a plurality of cross sections by which the selected component shape is cut in a direction along the sheet thickness direction of the metal sheet before forming; an inflow amount calculation unit configured to individually determine the inflow amount of a material required for forming the reference shape into the selected component shape based on a cross-sectional line length of the selected component shape cut by the cross section, the cross-sectional line length in the reference shape cut by the same cross section as the cross section, and the uniform elongation of the material of the metal sheet for each cross section; a cross-sectional line length calculation unit configured to individually calculate the cross-sectional line length for each cross section in each step from the reference step to a step one before the selection step based on the distributed inflow amount; and a shape determination unit configured to determine the die shape in each step from the reference step to the step one before the selection step based on the calculated cross-sectional line length.

Advantageous Effects of Invention

According to the aspects of the present invention, even when a pressed component shape that cannot be formed without being greatly drawn is produced, a pressed component can be more reliably produced.

According to the aspects of the present invention, a material can be caused to flow into a product without excess or deficiency after obtaining a sufficient elongation of the material through a plurality of steps of pressing. Therefore, the aspects of the present invention make it possible to maximally improve the material yield while suppressing cracks and wrinkles in the product.

Brief Description of Drawings

FIG. 1 is a view for explaining shape determination processing according to an embodiment based on the present invention;

FIG. 2 is a view illustrating an example of a selected component shape (final component shape) according to the embodiment based on the present invention;

FIG. 3 is a plan view illustrating an example of setting an axis;

FIG. 4 is a view illustrating an example of setting a plurality of cross sections;

FIG. 5 is a view illustrating an example of the relationship between the selected component shape (final component shape) and a reference shape (blank shape); and

FIG. 6 is a view for explaining a setting example in Examples.

Description of Embodiments

Next, embodiments of the present invention will be described with reference to the drawings.

A method for producing a pressed component of this embodiment is a method for producing a pressed component for press forming a metal sheet into a final component shape through two or more press steps. The two or more press steps include a press step carried out by drawing.

For example, the method for producing a pressed component of this embodiment includes press forming a metal sheet into a final component shape (target component shape) through two or more press steps including a press step carried out by drawing. In the production of the pressed component, an increase in the line length of the cross-sectional component shape in the final component shape with respect to the line length of the metal sheet before forming in the press forming of the metal sheet into the final component shape by a single press step is determined. Based on the increase in the line length, the inflow amount of a material required for forming the metal sheet into the final component shape is determined. The determined inflow amount of the material is distributed to each step, and a preformed shape after press forming in the steps other than the final press step is determined.

A die in each step for realizing the determined preformed shape is designed. By carrying out the press forming in each step using the designed die, a product (pressed component) of the target final component shape is produced.

Next, a method for determining each preformed shape after the press forming and a method for designing the die in each step for realizing the determined preformed shape in each step for forming the product of the final component shape (pressed component) are described.

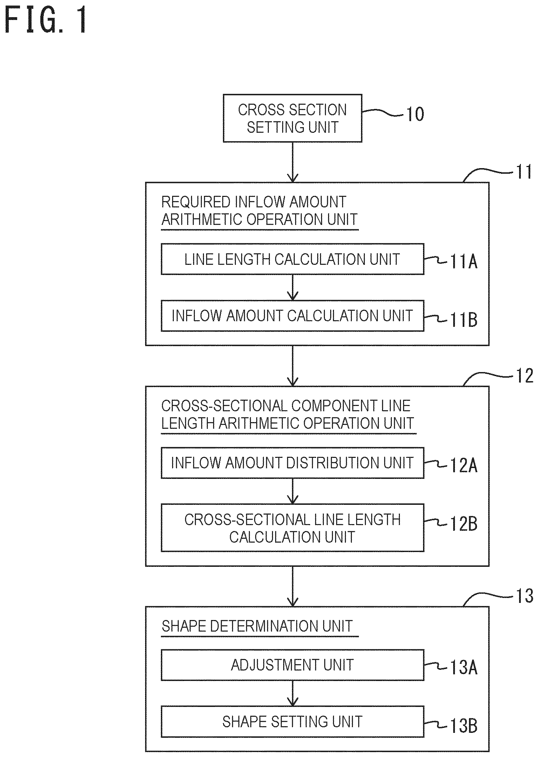

This embodiment determines the preformed shape in each step, and designs the die in each step using a die shape designing device having functional blocks 10 to 13 as illustrated in FIG. 1.

(Die shape designing device)

The die shape designing device is provided in the form of a program carried out on a computer and includes a cross section setting unit 10 constituting a cross section setting step, a required inflow amount arithmetic operation unit 11 constituting a required inflow amount arithmetic operation step, a cross-sectional component line length arithmetic operation unit 12, and a shape determination unit 13 constituting a shape determination step as illustrated in FIG. 1, and processing is performed in this order.

Herein, one step is selected from a plurality of press steps, and the selected step is described as a selection step. The component shape obtained in the selection step is described as a selected component shape 1. One press step selected from the plurality of press steps and carried out before the selection step is described as a reference step. The shape of the metal sheet before press forming in the reference step is described as a reference shape 6.

Then, the press steps from the reference step to the selection step are set to include a press step having drawing.

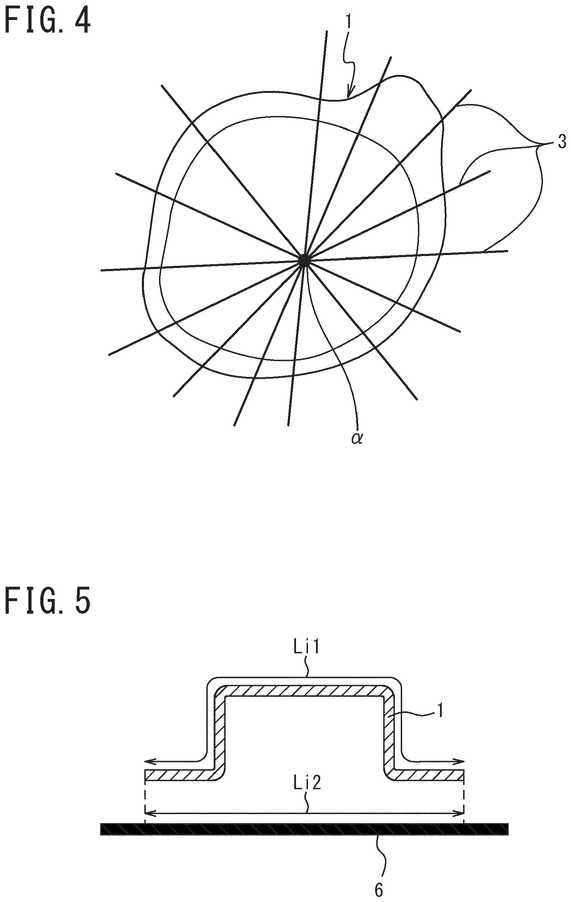

This embodiment describes a case where the selection step is set as the final press step as an example. In this case, the selected component shape 1 is the final component shape. Further, this embodiment describes a case where the reference step is set as a first press step as an example. In this case, the reference shape 6 is a blank shape before press forming, such as a flat sheet (see FIG. 5).

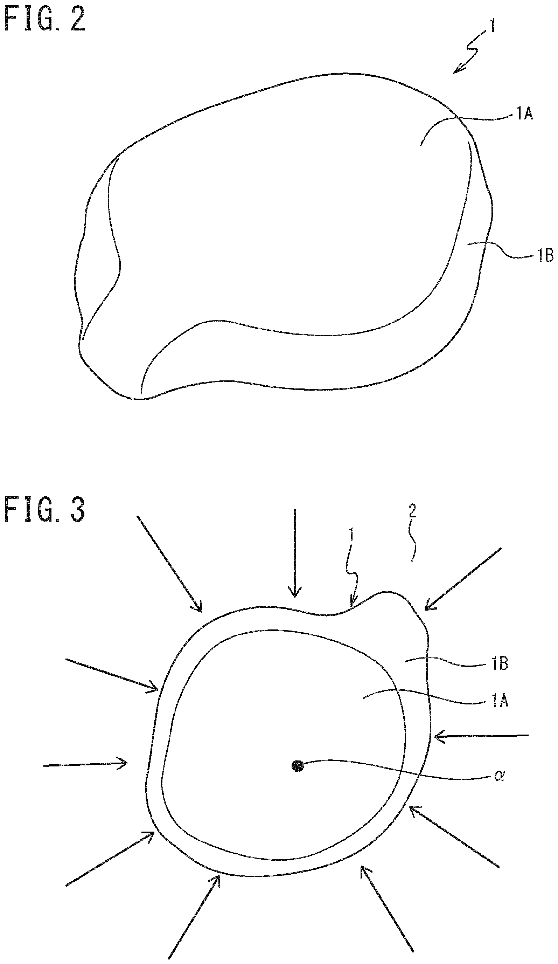

This embodiment is more effective for a case where the selected component shape 1 has a shape in which the material flows from a plurality of directions, e.g., all of the directions, on the outer periphery toward the inside (toward the center) of the sheet in plan view when forming is performed by a single press step. The selected component shape 1 has a shape formed by stretch forming and having a top sheet portion 1A and an endless annular side wall portion 1B in plan view continuous to the entire outer periphery of the top sheet portion 1A. FIG. 2 illustrates an example of the selected component shape 1.

(Cross section setting unit 10)

The cross section setting unit 10 sets a plurality of cross sections by which the selected component shape 1 is cut in a direction along the sheet thickness direction of the metal sheet before forming. The direction along the sheet thickness direction is a press direction, for example.

The cross-section setting unit 10 of this embodiment first sets an axis $\alpha$ crossing a direction in which the material mainly flows when the metal sheet of the reference shape 6 is drawn into the selected part shape 1 by a single step in the direction along the sheet thickness direction of the metal sheet before forming (see FIG. 3). For example, the axis $\alpha$ perpendicular to the direction in which the material mainly flows (axis $\alpha$ extending in the press direction) is set. In FIG. 3, lines indicated by the arrows indicate the directions in which the material mainly flows. The axis $\alpha$ may be set so as to extend in the press direction or in the sheet thickness direction of the blank before processing.

Herein, the direction in which the material mainly flows refers to a representative material flow direction and refers to a direction in which the material of an amount equal to or larger than a predetermined amount flows or an approximate moving direction of the material, for example.

A case is assumed in which the drawing to the selected component shape 1 has a shape in which the material flows from all of the directions on the outer periphery of the sheet. In this case, the axis $\alpha$ is preferably set at the center position in a method for causing the material to flow from all of the directions on the outer periphery or in the vicinity of the center position, e.g., at the center position of the top sheet portion 1A, in plan view.

Then, the cross section setting unit 10 sets n cross sections cut by n planes containing the axis $\alpha$. The cross sections are cross sections in planes extending in the direction along the sheet thickness and different from each other. The plurality of cross-sections is a plane containing the axis $\alpha$. Therefore, as illustrated in FIG. 4, cross sections 3 are arranged side by side in the circumferential direction around the axis $\alpha$. The plane including the axis $\alpha$ refers to a plane passing through the axis $\alpha$.

Herein, in the description above, the axis $\alpha$ is set according to the material flow direction in the press formation into the target shape, but the present invention is not limited thereto. For example, the axis $\alpha$ may be set at a center portion of the top sheet portion in the selected component shape 1, at the position of the center of gravity of the selected component shape 1 in plan view, or the like. Alternatively, two or more of the axes $\alpha$ may be set and the cross section may be set for each axis.

The plurality of cross sections may be set independently of the axis. For example, at positions passing through the top sheet portion of the selected component shape 1, planes may be set which define a plurality of cross sections in a grid pattern in plan view.

When the plurality of cross sections 3 is defined by the planes extending radially in plan view with the axis $\alpha$ as a reference, it becomes easier to adjust a line length difference between cross sections adjacent to each other in plan view. When the selected component shape 1 has the shape in which the material flows from a plurality of directions on the outer periphery toward the center of the sheet in plan view when forming is performed by a single press step, the axis $\alpha$ may be used as a reference. In this case, each cross section is easily set along the direction along the material flow direction. As a result, the flow rate of the material can be more properly distributed.

<Example of selected component shape 1>

Herein, an example of the selected component shape 1 illustrated in FIG. 2 simulates a wheel house of an automobile. In such a case of this example, the forming depth is deep, and therefore it is generally difficult to form the shape without causing cracking and with a good yield. When the shape is formed by drawing, a direction in which the material flows with respect to a product is the direction illustrated in FIG. 2. In this case, the axis $\alpha$ is set approximately perpendicular to the direction in which the material flows and parallel to the z-axis (FIG. 3), for example. Next, a group of n planes containing the axis $\alpha$ is set (FIG. 4) . The shapes of the cross sections of n target shapes (surface indicated by the reference numeral 3 in FIG. 4) obtained by this group of planes is a desired component cross-sectional shape. n may be an integer of 1 or more. However, when the number of the cross sections 3 is larger, the inflow amount can be more precisely estimated and the die can be more precisely designed. Therefore, the number of cross sections is desirably set to $5 \leq n$.

(Required inflow amount arithmetic operation unit 11)

The required inflow amount arithmetic operation unit 11 individually determines, for each cross section, the inflow amount of the material required for forming the reference shape 6 into the selected component shape 1 based on the cross-sectional line length of the selected component shape 1 cut by the cross section, the cross-sectional line length in the reference shape 6 cut by the same cross section as the cross section, and the uniform elongation of the material of the metal sheet.

The required inflow amount arithmetic operation unit 11 includes a line length calculation unit 11A and an inflow amount calculation unit 11B.

Herein, in this specification, the number of the plurality of cross sections is defined as n. The subscript identifying each cross section is defined as i ($1 \leq i \leq n$). The line length in the selected component shape 1 is defined as $L_i1$ and the line length in the reference shape 6 is defined as $L_i2$, which are cut by the same cross section for each cross section. The uniform elongation of the material is defined as El. The number of the press steps from the reference step to the selection step is defined as m. The subscript identifying the press step is defined as j ($1 \leq j \leq m$).

<Line length calculation unit 11A>

The line length calculation unit 11A sets each component cross-sectional shape in which the selected component shape 1 is cut by each set cross section as $S_i$ (wherein $1 \leq i \leq n$). Then, the line length ($L_i1$) in the selected component shape 1 and the line length ($L_i2$) in the reference shape 6 in the same cross section are individually calculated. More specifically, the line length ($L_i1$) in the selected component shape 1 and the line length ($L_i2$) in the reference shape 6 (planar shape in this embodiment) when the cross section of the selected component shape 1 is projected in the press direction as illustrated in FIG. 5 are individually calculated for each cross section.

<Inflow amount calculation unit 11B>

The inflow amount calculation unit 11B calculates the inflow amount ($L_i3$) required for forming the selected component shape 1 in each cross section from the uniform elongation (El) of the material of the metal sheet and the line length ($L_i1$) in the selected component shape 1 and the line length ($L_i2$) in the reference shape 6 calculated in the line length calculation step for each cross section.

In this embodiment, the inflow amount ($L_i3$) required for the forming is calculated from Expression (1).

$$L_i3 = L_i1 - L_i2 - aEl \qquad \cdots (1)$$

In Expression (1), 0 < a < 1 is established.

Herein, $L_i1$ is the cross-sectional line length of the i-th cross section in the selected component shape 1 (final component shape in this embodiment). $L_i2$ is the cross-sectional line length of the i-th cross section in the reference shape 6 (initial state in this embodiment). Therefore, to obtain the cross-sectional line length of the final state from the initial state, it is necessary to extend (increase) the line length by the length of ($L_i1 - L_i2$). This extension length needs to be compensated by the sum of the elongation amount of the material (aEl) and the inflow amount ($L_i3$).

The elongation amount of the material is limited by the uniform elongation (El) of the material, and it is necessary to cause the material to flow in the amount that cannot be compensated by the extension amount.

The coefficient a in Expression (1) is a constant setting the elongation degree of the material with respect to the limit of the uniform elongation of the material. A case of a = 0 means that the material is not elongated at all, and the insufficient line length is all compensated by the inflow. A case of a = 1 means that the material is elongated to the limit in all of the design areas, and the insufficient line length is compensated by the inflow. Theoretically, a can take any real number of 0 or more and 1 or less. However, the case of a = 0 assumes that the material is not elongated at all, and thus there is no meaning in using the method of the present invention. In the case of a = 1, it is necessary to elongate the material to the limit in all of the design areas, but such forming is extremely difficult by common press forming. Therefore, 0 and 1 are excluded from the range of a. A desirable range of a is $0.2 \leq a \leq 0.8$.

(Cross sectional component line length arithmetic operation unit 12)

The cross-sectional component line length arithmetic operation unit 12 distributes the determined inflow amount to each step from the reference step to the selection step for each cross section. The cross-sectional component line length arithmetic operation unit 12 arithmetically operates the cross-sectional line length in each step from the reference step to a step one before the selection step based on the distributed inflow amount.

The cross-sectional component line length arithmetic operation unit 12 includes an inflow amount distribution unit 12A constituting an inflow amount allocation step and a cross-sectional line length calculation unit 12B constituting the cross-sectional line length calculation step.

<Inflow amount distribution unit 12A>

The inflow amount distribution unit 12A carries out the processing of distributing the determined inflow amount to each step from the reference step to the selection step for each cross section.

The inflow amount $L_i3$ obtained in the required inflow amount arithmetic operation unit 11 may be allowed to inflow as the sum of the inflow amounts of all of the steps from the reference step to the selection step. This makes it possible to distribute the inflow amount in each step.

The inflow amount distribution unit 12A distributes the inflow amount of the k-th step in the i-th cross section as $b_k \cdot L_i3$ for each cross section.

Herein, k is the number of the step. The reference step is k = 1 and the selection step is k = m. i is the number of each cross section. More specifically, the coefficient $b_k$ sets the inflow degree of the material in the k-th step among all of m times of press steps.

$\Sigma_{k=1}^{m}(b_k \cdot L_i3) = L_i3$ is established. Therefore, the setting is performed to satisfy $\Sigma_{k=1}^{m}(b_k) = 1$. $0 \leq b_k \leq 1$ is set.

For example, when the forming is performed by two steps (m = 2), the inflow amount in the first step is set to $b_1 \times L_i3$ and the inflow amount in the second step is set to $b_2 \times L_i3$ (in which $b_1 + b_2 = 1$ is established). At this time, a case of $b_1 = 0$ means that the material is not caused to flow in the first step. A case of $b_2 = 0$ similarly means that the material is not caused to flow in the second step.

In general, it is desirable in the final press step that the inflow is suppressed from the viewpoint of the appearance, the component shape accuracy, and the like and tension is given to the component. Therefore $b_m < 1$ is desirably set. On the other hand, $b_m$ is made as small as possible in the previous forming. Therefore, $b_k > 0$ (k < m) is desirably established.

<Cross-sectional line length calculation unit 12B>

The cross-sectional line length calculation unit 12B calculates the cross-sectional line length for each cross section in each step from the reference step to the step one before the selection step based on the distributed inflow amount.

In each cross section, the cross-sectional line length ($L_i4$) in each step is the sum of the sum of the materials allowed to inflow up to the step and the line length in the initial state. Therefore, it is represented by Expression (2) .

The cross-sectional line length calculation unit 12B determines the cross-sectional line length ($L_i4$) in the j-th step in each cross section by Expression (2) . j takes a value of $1 \leq j \leq m-1$. The cross-sectional line length in the j-th step does not need to determine because it is the cross section of the selected component shape 1.

$$L_i4 = L_i2 + (b_1 + \cdots + b_j) \cdot L_i3$$

$$= L_i2 + \Sigma_{k=1}^{j}(b_k \cdot L_i3) \qquad \cdots (2)$$

(Shape determination unit 13)

The shape determination unit 13 determines the preformed shape after the press forming in each step from the reference step to the step one before the selection step based on the calculated cross-sectional line length. Then, the die shape forming the determined preformed shape is determined.

The shape determination unit 13 of this embodiment includes an adjustment unit 13A constituting an adjustment step and a shape setting unit 13B. The adjustment unit 13A may not be provided.

<Adjustment unit 13A>

The adjustment unit 13A adjusts the length of the cross-sectional line length for each cross section on the condition that the total sum of the cross-sectional line length for each cross section calculated by the cross-sectional line length calculation unit 12B is not changed. This adjustment is carried out for each step from the reference step to the step one before the selection step. The adjustment unit 13A adjusts the cross-sectional line length based on a line length difference between adjacent cross sections as viewed from the extending direction (press direction) of the axis $\alpha$, for example. For example, the adjustment is performed such that the line length difference between the adjacent cross sections is small.

The adjustment unit 13A of this embodiment adjusts the distribution of cross-sectional line lengths $L_14$ to $L_n4$ based on the condition that the total sum of the cross-sectional line lengths $L_14$ to $L_n4$ in a target step is not changed and calculates cross-sectional line lengths $L_15$ to $L_n5$ after the adjustment.

Herein, the cross-sectional line length calculation unit 12B calculates the cross-sectional line length $L_i4$ for each cross section, which defines the preformed shape in each press step. There is sometimes a cross section where the cross-sectional line length $L_i4$, among the cross-sectional line lengths, in a certain step is extremely longer or shorter than a cross-sectional line length $L_{(i-1)}4$ in a step one before the certain step and a cross-sectional line length $L_{(i+1)}4$ in a step one after the certain step. This case means that the component shape is sharply changed in that place. In this case, there is a possibility that strain or an excess material is extremely concentrated on that place during the forming, resulting in the generation of cracks or wrinkles . To prevent that, the adjustment unit 13A of this embodiment changes the line length distribution in the circumferential direction such that a line length difference between $L_i4$, and $L_{(i-1)}4$ and $L_{(i+1)}4$, which is the cross-sectional line length difference between the adjacent steps, decreases and determines a cross-sectional line length $L_i5$.

Specifically, $L_i5$ is determined to satisfy Expression (3) and Expression (4) below.

$$L_i5 \leq c \cdot (L_{(i-1)}4 + L_{(i+1)}4)/2 \qquad \cdots (3)$$

In Expression (3), $0.75 \leq c \leq 1.25$ is established.

$$L_15 + \cdots + L_i5 + \cdots L_n5 = L_14 + \cdots + L_i4 + \cdots L_n4$$

$$(4)$$

c in Expression (3) defines the upper and lower limits of the line length difference between the adjacent cross sections. The range of c is $0.75 \leq c \leq 1.25$ and desirably $0.85 \leq c \leq 1.15$.

Further, $L_i5$ needs to satisfy Expression (4). More specifically, the sum of all of $L_i4$ and the sum of all of $L_i5$ are regulated to be equal to each other.

The sum of the cross-sectional line lengths further approaches the surface area with an increase in the number n of the cross sections. Also from this viewpoint, it is better for n to take a large number. More specifically, regulating that the sum of all of $L_i4$ and the sum of all of $L_i5$ are equal to each other is equivalent to changing the cross-sectional shape without changing the surface area. By partially adjusting the line length without changing the surface area, the local elongation of the material can be suppressed without changing the elongation of the material as a whole. When the condition of Expression (4) is not satisfied after the processing up to Expression (3) has been performed, the adjustment unit 13A of this embodiment performs the processing of Expression (5) and adjusts $L_i5$ to satisfy Expression (4).

$$L_i5 \leq d \cdot (L_{(i-1)}5 + L_{(i+1)}5)/2 \qquad \cdots \quad (5)$$

In Expression (5), $0.75 \leq d \leq 1.25$ is established.

The range of d is desirably $0.85 \leq d \leq 1.15$.

<Shape design setting unit 13B>

The shape setting unit 13B designs the preformed shape for (m-1) steps using the cross-sectional line length $L_i5$ obtained through all of the processing above. The (m-1) steps refer to steps from the reference step to the step one before the selection step.

The design in each step is performed by combining continuous curved surfaces in which the cross section at the i-th position has the $L_i5$ line length and which are smoothly connected to the (i-1)-th and (i+1)-th cross sections adjacent to each other. The design shape desirably satisfies conditions (1) to (4).

    (1) The shape is smoothly connected to a shape other than a design site.
    (2) The shape has a smooth curved cross section and has no singular points in the cross section.
    (3) The shape does not interfere with a die when set in the die in the next step.
    (4) The shape does not contact a die before blank holding in the next step.

Then, a die shape of a die corresponding to the preformed shape of the determined shape is designed.

Herein, when the required inflow amount of the material cannot be successfully distributed with the current number of the press steps, it may be acceptable that the number of the press steps is increased, and then the processing above is carried out again. When the distribution of the inflow amount in each step has an allowance equal to or larger than a predetermined allowance, it may be acceptable that the number of steps is reduced, and the design of the preformed shape (die shape) in each step above is carried out. The number of steps may be optimized based on the final component shape by the processing of this embodiment.

(Die)

Examples of dies each designed by the die shape designing device of this embodiment and used in each step are described.

The dies described below each are a die used in each step from the reference step to the selection step. The forming surfaces of the dies are as follows.

The forming surface of the die in the selection step follows the shape of the selected component shape.

Herein, a plurality of cross sections is set by which the selected component shape is cut in a direction along the sheet thickness direction of the metal sheet before forming. For example, an axis is set which crosses a direction in which the material mainly flows when the metal sheet of the reference shape is drawn into the selected part shape 1 by a single step using the die in the selection step and extends along the sheet thickness direction, and a plurality of cross sections cut by each of planes containing the axis is set.

For each cross section, each of the cross-sectional shapes cut by the plurality of cross sections in the forming surface of the die in each step is set from the inflow amount of the material set based on the cross-sectional line length of the selected component shape cut by the cross section, the cross-sectional line length in the reference shape cut by the same cross section as the cross section, and the uniform elongation of the material of the metal sheet.

The number of the plurality of cross sections is defined as n, the subscript identifying each cross section is defined as i ($1 \leq i \leq n$), the line length in the selected component shape is defined as $L_i1$ and the line length in the reference shape is defined as $L_i2$, which are cut by the same cross section for each cross section, the uniform elongation of the material is defined as El, the number of the press steps from the reference step to the selection step is defined as m, and the subscript identifying the press step is defined as j ($1 \leq j < m$).

In this case, for the set inflow amount of the material, the inflow amount ($L_i3$) of the cross section i is set by Expression (1) below.

The cross-sectional line length ($L_i4$) of the cross section i in the forming surface of a die used in the j-th step is represented by Expression (2) below.

The coefficient $b_k$ ($1 \leq k \leq m$) satisfies $\Sigma_{j=1}{}^m(b_k) = 1$.

$$L_i3 = L_i1 - L_i2 - a \cdot El \qquad \cdots \quad (1)$$

In Expression (1), $0 < a < 1$ is established.

$$L_i4 = L_i2 + \Sigma_{k=1}{}^j(b_k \cdot L_i3) \qquad \cdots \quad (2)$$

In Expression (2), $0 \leq b_k \leq 1$ is established.

Herein, the selection step may be the final press step and the reference step may be the first press step.

The selected component shape has a shape in which the material flows from a plurality of directions on the outer periphery toward the center of the sheet in plan view when forming is performed by a single press step.

For example, the selected component shape has a shape including the top sheet portion and the endless annular side wall portion continuous to the entire outer periphery of the top sheet portion.

Further, it is preferable that the cross-sectional line length difference between the adjacent cross sections is equal to or less than the preset value in the forming surface of the die for each step.

For example, based on the condition that the total sum of the cross-sectional line lengths $L_14$ to $L_n4$ in the forming surface in a target step is not changed, the distribution of the cross-sectional line lengths $L_14$ to $L_n4$ is adjusted, and then the cross-sectional line lengths $L_15$ to $L_n5$ after the adjustment are set.

Herein, the cross-sectional line length $L_i4$ for each cross section defining the shape of the forming surface in each press step is calculated. There is sometimes a cross section in which the cross-sectional line length $L_i4$ in a certain step, among the cross-sectional line lengths, is extremely longer or shorter than the cross-sectional line length $L_{(i-1)}4$ in a step one before the certain step and the cross-sectional line length $L_{(i+1)}4$ in a step one after the certain step. This case means that the component shape is sharply changed in that place. In this case, there is a possibility that strain or an excess material is extremely concentrated on that place during the forming, resulting in the generation of cracks or wrinkles. To prevent that, the line length distribution is changed in the circumferential direction such that a line length difference between $L_i4$, and $L_{(i-1)}4$ and $L_{(i+1)}4$, which is the cross-sectional line length difference between the adjacent steps, decreases and the cross-sectional line length $L_i5$ is determined.

Specifically, $L_i5$ is determined to satisfy Expression (3) and Expression (4) below.

$$L_i5 \leq c \cdot (L_{(i-1)}4 + L_{(i+1)}4)/2 \qquad \cdots \quad (3)$$

In Expression (3), $0.75 \leq c \leq 1.25$ is established.

$$L_15 + \cdots + L_i5 + \cdots L_n5 = L_14 + \cdots + L_i4 + \cdots L_n4$$

$$(4)$$

c in Expression (3) defines the upper and lower limits of the line length difference between the adjacent cross sections. The range of c is $0.75 \leq c \leq 1.25$ and desirably $0.85 \leq c \leq 1.15$.

Further, $L_i5$ needs to satisfy Expression (4). More specifically, the sum of all of $L_i4$ and the sum of all of $L_i5$ are regulated to be equal to each other.

The sum of the cross-sectional line lengths further approaches the surface area with an increase in the number n of the cross sections. Also from this viewpoint, it is better for n to take a large number. More specifically, regulating that the sum of all of $L_i4$ and the sum of all of $L_i5$ are equal to each other is equivalent to changing the cross-sectional shape without changing the surface area. By partially adjusting the line length without changing the surface area, the local elongation of the material can be suppressed without changing the elongation of the material as a whole.

When the condition of Expression (4) is not satisfied after the processing up to Expression (3) has been performed, the processing of Expression (5) below is performed and $L_i5$ is adjusted to satisfy Expression (4).

$$L_i5 \leq d \cdot (L_{(i-1)}5 + L_{(i+1)}5)/2 \qquad \cdots \ (5)$$

In Expression (5), $0.75 \leq d \leq 1.25$ is established.
The range of d is desirably $0.85 \leq d \leq 1.15$.

(Operations and others)

In this embodiment, the metal sheet is press formed into the final component shape through two or more press steps including the press step carried out by the drawing. In the production of this pressed component, the inflow amount in each step in each cross section is set to a proper value, and each preformed shape (die shape) in each step is set.
Therefore, even when the pressed component shape that cannot be formed without being greatly drawn is produced, the inflow amount of the material gained in each press step can be properly set. As a result, the generation of cracks or wrinkles can be suppressed in the produced pressed component.
Further, a cushion pressure in the press forming, the bead shape of the die, and the like are adjusted, and then the inflow amount in each place is adjusted to have a value close to the cross-sectional line length $L_i3$. This makes it possible to minimize the inflow of the material and improve the yield.
More specifically, this embodiment sets a plurality of cross sections almost parallel to the press direction from the component shape obtained in the final press step and a blank in the initial state when the drawing is performed by a plurality of steps, for example. Then, from the cross sections, the finally required cross-sectional line length and the initial cross-sectional shape are calculated. Based on the calculation result and the uniform elongation of a material to be used, the inflow amount required for the forming is calculated. The determined inflow amount is distributed to each step, and the cross-sectional line length in each step is calculated. Based on the calculated cross-sectional line length, a die shape (preformed shape) in each step (not required in the final press step) is designed. By performing the press forming in each step using the designed die, a pressed component (pressed component of the final component shape) free from cracks or wrinkles and having a maximally improved yield can be obtained.
Herein, when the inflow amount of the material is excessively small in the forming by the drawing, the material is insufficient in the pressed component, so that the elongation of the material exceeds the limit, resulting in the generation of cracks. Conversely, when the inflow amount of the material is excessively large, the material in the pressed component is sufficient, and therefore cracks are less likely to generate. However, there is concern that wrinkles are generated when the amount of the material to be led is excessively large. Further, it is disadvantageous from the viewpoint of the material yield, and therefore it is important to optimize the inflow amount.
When the forming is performed by a common forming method, the drawing introduces less strain into the material of a punch bottom due to frictional resistance, bending resistance in a punch shoulder, or the like. Therefore, strain increases in the punch shoulder, a die shoulder, or a wall portion between the punch shoulder and the die shoulder, so that cracks are generated in that place in many cases. Therefore, there is a risk that, even though the introduced strain amount is small, the strain is locally concentrated, causing cracking in the pressed component as a whole. More specifically, it is difficult to say that the elongation of the material is fully utilized in many cases.
In contrast thereto, this embodiment can estimate the inflow amount required when the target shape is formed by drawing without excess or deficiency. In addition, this embodiment forms the material into a shape having a proper cross-sectional line length while causing the material to flow by dividing the inflow amount in each step. As a result, an improvement of the formability and the yield can also be achieved by introducing strain in advance in the previous step into the vicinity of the punch bottom where strain is difficult to enter in common forming.

(Others)

The disclosure can take the following configurations.

(1) A method for producing a pressed component for press forming a metal sheet into a final component shape through two or more press steps including a press step carried out by drawing, and the method for producing a pressed component includes: determining the inflow amount of a material required for forming the metal sheet into the final component shape based on the increase (increase with respect to the cross-sectional line length before the forming of the metal sheet into the final component shape) in the cross-sectional line length of the final component shape with respect to the cross-sectional line length of the metal sheet before forming in the press forming of the metal sheet into the final component shape by a single press step; and distributing the determined inflow amount of the material to each step including a final press step, and determining a preformed shape after press forming in steps other than the final press step based on the distributed inflow amount.

For example, a method for producing a pressed component for press forming a metal sheet into a final component shape through a plurality of press steps, in which, when one step is selected from the plurality of press steps and set as a selection step, a component shape obtained in the selection step is set as the selected component shape 1, one press step selected from the plurality of press steps and carried out before the selection step is set as a reference step, and the shape of the metal sheet before press forming in the reference step is set as the reference shape 6, the press steps from the reference step to the selection step include a press step having drawing, and the method for producing a pressed component is configured to include: a cross section setting step of setting a plurality of cross sections by which the selected component shape 1 is cut in a direction along the sheet thickness direction of the metal sheet before forming; an inflow amount calculation step of individually determining the inflow amount of a material required for forming the reference shape 6 into the selected component shape 1 based on a cross-sectional line length of the selected component shape 1 cut by the cross section, the cross-sectional line length in the reference shape 6 cut by the same cross section as the cross section, and the uniform elongation of the material of the metal sheet for each cross section; an inflow amount distribution step of distributing the determined inflow amount to each step from the reference step to the selection step for each cross section; a cross-sectional line length calculation step of individually calculating the cross-sectional line length for each cross section in each step from the reference step to a step one before the selection step based on the distributed inflow amount; and a shape determination step of determining a preformed shape after the press forming in each step from the reference step to the step one before the selection step based on the calculated cross-sectional line length.

At this time, the selection step can be set as the final press step and the reference step can be set as the first press step.

This configuration can provide a method for producing a pressed component applicable even when a pressed component shape that cannot be formed without being greatly drawn is produced.

(2) The cross section setting step sets an axis $\alpha$ crossing a direction in which the material mainly flows when the metal sheet is drawn into the selected component shape 1 by a single step and extending in the direction along the sheet thickness direction of the metal sheet before forming and sets the plurality of set cross sections as cross sections cut by a plurality of planes containing the axis $\alpha$, the shape determination step has an adjustment step of adjusting the length of the cross-sectional line length for each cross section on the condition that the total sum of the cross-sectional line length for each cross section calculated in the cross-sectional line length calculation step is not changed for each step from the reference step to the step one before the selection step, and the shape determination step determines the preformed shape after the press forming based on the cross-sectional line length for each cross section after the adjustment in the adjustment step.

For example, the adjustment step adjusts the cross-sectional line length based on a cross-sectional line length difference between adjacent cross sections as viewed from the extending direction of the axis $\alpha$.

At this time, the method is suitable for a case where the selected component shape 1 has a shape in which the material flows from a plurality of directions on the outer periphery toward the center of the sheet in plan view when forming is performed by a single press step.

For example, the selected component shape 1 has a shape including the top sheet portion 1A and the endless annular side wall portion 1B continuous to the entire outer periphery of the top sheet portion 1A.

This configuration can more properly set the inflow amount of the material gained in each press step even when the pressed component shape that cannot be formed without being greatly drawn is produced.

When the selected component shape 1 has the shape in which the material flows from a plurality of directions on the outer periphery toward the center of the sheet in plan view when forming is performed by a single press step, the position of each cross section is likely to be set in the direction along the main material flow direction by setting planes defining the cross sections with the axis $\alpha$ as a reference, so that the flow amount of the material can be more properly distributed.

Further, by forming the plurality of cross sections with the axis as a reference, the plurality of cross sections is set radially around the axis in plan view, and therefore the adjustment of the line length in the entire circumferential direction in the adjustment unit 13A can be easily and reliably carried out.

(3) When the number of the plurality of cross sections is defined as n, the subscript identifying each cross section is defined as i ($1 \leq i \leq n$), the line length in the selected component shape 1 is defined as $L_i1$ and the line length in the reference shape 6 is defined as $L_i2$, which are cut by the same cross section for each cross section, the uniform elongation of the material is defined as El, the number of the press steps from the reference step to the selection step is defined as m, and the subscript identifying the press step is defined as j ($1 \leq j \leq m$), the inflow amount ($L_i3$) of the cross section i calculated in the inflow amount calculation step is determined by Expression (1) below, the cross-sectional line length ($L_i4$) of the cross section i in the j-th step calculated in the cross-sectional line length calculation step is determined by Expression (2) below, the coefficient a in Expression (1) sets the elongation degree of the material with respect to the uniform elongation of the material, the coefficient $b_k$ in Expression (2) sets the inflow degree of the material in the j-th step among all of m times of press steps, and the coefficient $b_k$ ($1 \leq k \leq m$) is set to satisfy $\Sigma_{j=1}^{m}(b_k) = 1$,

$$L_i 3 = L_i 1 - L_i 2 - a \cdot El \qquad \cdots \quad (1),$$

in Expression (1), $0 < a < 1$ is established,

$$L_i 4 = L_i 2 + \Sigma_{k=1}^{j} (b_k \cdot L_i 3) \qquad \cdots \quad (2),$$

in Expression (2), $0 \leq b_k \leq 1$ is established.

This configuration can more reliably set an appropriate cross-sectional line length in each step.

(4) A method for designing a die used in press forming a metal sheet into a final component shape through two or more press steps including a press step carried out by drawing, and the method for designing a die includes: determining the inflow amount of a material required for forming the metal sheet into the final component shape based on the increase in the cross-sectional line length of the final component shape with respect to the cross-sectional line length of the metal sheet before forming in the press forming of the metal sheet into the final component shape by a single press step; and distributing the determined inflow amount of the material to each step including a final press step, and determining a die shape used in steps other than the final press step based on the distributed inflow amount.

For example, a method for designing a die used in press forming a metal sheet into a final component shape through a plurality of press steps, in which, when one step is selected from the plurality of press steps and set as a selection step, a component shape obtained in the selection step is set as the selected component shape 1, one press step selected from the plurality of press steps and carried out before the selection step is set as a reference step, and the shape of the metal sheet before press forming in the reference step is set as the reference shape 6, the press steps from the reference step to the selection step include a press step having drawing, and the method for designing a die is configured to include: a cross section setting step of setting a plurality of cross sections by which the selected component shape 1 is cut in a direction along the sheet thickness direction of the metal sheet before forming; an inflow amount calculation step of individually determining the inflow amount of a material required for forming the reference shape 6 into the selected component shape 1 based on a cross-sectional line length of the selected component shape 1 cut by the cross section, the cross-sectional line length in the reference shape 6 cut by the same cross section as the cross section, and the uniform elongation of the material of the metal sheet for each cross section; an inflow amount distribution step of distributing the determined inflow amount to each step from the reference step to the selection step for each cross section; a cross-sectional line length calculation step of individually calculating the cross-sectional line length for each cross section in each step from the reference step to a step one before the selection step based on the distributed inflow amount; and a shape determination step of determining a die shape used in each step from the reference step to the step one before the selection step based on the calculated cross-sectional line length.

The selection step can be set as the final press step and the reference step can be set as the first press step.

This configuration can design a die shape in each step applicable even when a pressed component shape that cannot be formed without being greatly drawn is produced.

(5) The cross section setting step sets an axis $\alpha$ crossing a direction in which the material mainly flows when the metal sheet is drawn into the selected component shape 1 by a single step and extending in the direction along the sheet thickness direction of the metal sheet before forming and sets the plurality of set cross sections as cross sections cut by a plurality of planes containing the axis $\alpha$, the shape determination step has an adjustment step of adjusting the length of the cross-sectional line length for each cross section on the condition that the total sum of the cross-sectional line length for each cross section calculated in the cross-sectional line length calculation step is not changed for each step from the reference step to the step one before the selection step, and the shape determination step determines the preformed shape after the press forming based on the cross-sectional line length for each cross section after the adjustment in the adjustment step.

For example, the adjustment step adjusts the cross-sectional line length based on a cross-sectional line length difference between adjacent cross sections as viewed from the extending direction of the axis $\alpha$.

At this time, the selected component shape 1 preferably has a shape in which the material flows from a plurality of directions on the outer periphery toward the center of the sheet in plan view when forming is performed by a single press step. For example, the selected component shape 1 has a shape including the top sheet portion 1A and the endless annular side wall portion 1B continuous to the entire outer periphery of the top sheet portion 1A.

This configuration can design a die capable of more properly setting the inflow amount of the material gained in each step even when a pressed component shape is produced in which the material needs to be caused to flow from the entire outer periphery and which cannot be formed without being greatly drawn.

(6) The method for designing a die is configured such that, when the number of the plurality of cross sections is defined as n, the subscript identifying each cross section is defined as i ($1 \leq i \leq n$), the line length in the selected component shape 1 is defined as $L_i 1$ and the line length in the reference shape 6 is defined as $L_i 2$, which are cut by the same cross section for each cross section, the uniform elongation of the material is defined as El, the number of the press steps from the reference step to the selection step is defined as m, and the subscript identifying the press step is defined as j ($1 \leq j \leq m$), the inflow amount ($L_i3$) of the cross section i calculated in the inflow amount calculation step is determined by Expression (1) below, the cross-sectional line length ($L_i4$) of the cross section i in the j-th step calculated in the cross-sectional line length calculation step is determined by Expression (2) below, the coefficient a in Expression (1) sets the elongation degree of the material with respect to the uniform elongation of the material, the coefficient $b_k$ in Expression (2) sets the inflow degree of the material in the j-th step among all of m times of press steps, and the coefficient $b_k$ ($1 \leq k \leq m$) satisfies $\Sigma_{j=1}{}^{m}(b_k) = 1$,

$$L_i3 = L_i1 - L_i2 - a \cdot El \quad \cdots \quad (1),$$

in Expression (1), $0 < a < 1$ is established,

$$L_i4 = L_i2 + \Sigma_{k=1}{}^{j}(b_k \cdot L_i3) \quad \cdots \quad (2),$$

in Expression (2), $0 \leq b_k \leq 1$ is established.

This configuration can more reliably design a die shape in which an appropriate cross-sectional line length in each step is set.

(7) A method for producing a pressed component using the die designed by the method for designing a die is provided.

This configuration can provide method for producing a pressed component applicable even when a pressed component shape that cannot be formed without being greatly drawn is produced.

(8) A die shape designing device for, in press forming a metal sheet into a final component shape through a plurality of press steps, determining a die shape of a die used in each step excluding a final press step, in which, when one step is selected from the plurality of press steps and set as a selection step, a component shape obtained in the selection step is set as the selected component shape 1, one press step selected from the plurality of press steps and carried out before the selection step is set as a reference step, and the shape of the metal sheet before press forming in the reference step is set as the reference shape 6, the press steps from the reference step to the selection step include a press step having drawing, and the die shape designing device includes: the cross section setting unit 10 configured to set a plurality of cross sections by which the selected component shape 1 is cut in a direction along the sheet thickness direction of the metal sheet before forming; the inflow amount calculation unit 11B configured to individually determine the inflow amount of a material required for forming the reference shape 6 into the selected component shape 1 based on the cross-sectional line length of the selected component shape 1 cut by the cross section, the cross-sectional line length in the reference shape 6 cut by the same cross section as the cross section, and the uniform elongation of the material of the metal sheet for each cross section; the inflow amount distribution unit 12A configured to distribute the determined inflow amount to each step from the reference step to the selection step for each cross section; the cross-sectional line length calculation unit 12B configured to individually calculate the cross-sectional line length for each cross section in each step from the reference step to a step one before the selection step based on the distributed inflow amount; and the shape determination unit 13 configured to determine the die shape in each step from the reference step to the step one before the selection step based on the calculated cross-sectional line length.

The selection step can be set as the final press step and the reference step can be set as the first press step.

This configuration can design a die shape in each step applicable even when a pressed component shape that cannot be formed without being greatly drawn is produced.

(9) The cross section setting unit 10 is configured to set an axis $\alpha$ crossing a direction in which the material mainly flows when the metal sheet is drawn into the selected component shape 1 by a single step and extending in the direction along the sheet thickness direction of the metal sheet before forming and set the plurality of set cross sections as cross sections cut by a plurality of planes containing the axis $\alpha$, the shape determination unit 13 has the adjustment unit 13A configured to adjust the length of the cross-sectional line length for each cross section on the condition that the total sum of the cross-sectional line length for each cross section calculated by the cross-sectional line length calculation unit 12B is not changed for each step from the reference step to the step one before the selection step, and the shape determination unit 13 is configured to determine the die shape based on the cross-sectional line length for each cross section after the adjustment by the adjustment unit 13A.

For example, the adjustment unit 13A adjusts the cross-sectional line length based on a cross-sectional line length difference between adjacent cross sections as viewed from the extending direction of the axis $\alpha$.

The selected component shape 1 preferably has a shape in which the material flows from a plurality of directions on the outer periphery toward the center of the sheet in plan view when forming is performed by a single press step. For example, the selected component shape 1 has a shape including the top sheet portion 1A and the endless annular side wall portion 1B continuous to the entire outer periphery of the top sheet portion 1A.

This configuration can design a die capable of more properly setting the inflow amount of the material gained in each step even when a pressed component shape is produced in which the material needs to be caused to flow from the entire outer periphery and which cannot be formed without being greatly drawn.

(10) The die shape designing device is configured such that, when the number of the plurality of cross sections is defined as n, the subscript identifying each cross section is defined as i ($1 \leq i \leq n$), the line length in the selected component shape 1 is defined as $L_i 1$ and the line length in the reference shape 6 is defined as $L_i 2$, which are cut by the same cross section for each cross section, the uniform elongation of the material is defined as El, the number of the press steps from the reference step to the selection step is defined as m, and the subscript identifying the press step is defined as j ($1 \leq j \leq m$), the inflow amount ($L_i 3$) of the cross section i calculated by the inflow amount calculation unit 11B is determined by Expression (1) below, the cross-sectional line length ($L_i 4$) of the cross section i in the j-th step calculated by the cross-sectional line length calculation unit 12B is determined by Expression (2) below, the coefficient a in Expression (1) sets the elongation degree of the material with respect to the uniform elongation of the material, the coefficient $b_k$ in Expression (2) sets the inflow degree of the material in the j-th step among all of m times of press steps, and the coefficient $b_k$ ($1 \leq k \leq m$) satisfies $\Sigma_{j=1}^{m}(b_k) = 1$,

$$L_i 3 = L_i 1 - L_i 2 - a \cdot El \quad \cdots \quad (1)$$

in Expression (1), $0 < a < 1$ is established,

$$L_i 4 = L_i 2 + \Sigma_{k=1}^{j}(b_k \cdot L_i 3) \quad \cdots \quad (2),$$

in Expression (2), $0 \leq b_k \leq 1$ is established.

This configuration can more reliably design a die shape in which an appropriate cross-sectional line length in each step is set.

(11) Each die used in each step when a pressed component is produced by press forming a metal sheet into a final component shape through a plurality of press steps, in which

one step is selected from the plurality of press steps and set as a selection step, a component shape obtained in the selection step is set as a selected component shape, one press step selected from the plurality of press steps and carried out before the selection step is set as a reference step, the shape of the metal sheet before press forming in the reference step is set as a reference shape, and the press steps from the reference step to the selection step include a press step having drawing,

for the forming surface of each die used in each step from the reference step to the selection step,

the forming surface of the die in the selection step has a shape following the selected component shape,

an axis is set which crosses a direction in which a material mainly flows when the metal sheet of the reference shape is drawn into the selected component shape by a single step using the die in the selection step and extends in a direction along the sheet thickness direction, and a plurality of cross sections cut by each of planes containing the axis is set,

for each cross section, each of the cross-sectional shapes cut by the plurality of cross sections in the forming surface of the die in each step is set from the inflow amount of the material set based on the cross-sectional line length of the selected component shape cut by the cross section, the cross-sectional line length in the reference shape cut by the same cross section as the cross section, and the uniform elongation of the material of the metal sheet,

when the number of the plurality of cross sections is defined as n, the subscript identifying each cross section is defined as i ($1 \leq i \leq n$), the line length in the selected component shape is defined as $L_i 1$ and the line length in the reference shape is defined as $L_i 2$, which are cut by the same cross section for each cross section, the uniform elongation of the material is defined as El, the number of the press steps from the reference step to the selection step is defined as m, and the subscript identifying the press step is defined as j ($1 \leq j \leq m$),

for the set inflow amount of the material, the inflow amount ($L_i 3$) of the cross section i is set by Expression (1) below, the cross-sectional line length ($L_i 4$) of the cross section i in the forming surface of a die used in the j-th step is represented by Expression (2) below, and

the coefficient $b_k$ ($1 \leq k \leq m$) satisfies $\Sigma_{j=1}^{m}(b_k) = 1$,

$$L_i 3 = L_i 1 - L_i 2 - a \cdot El \quad \cdots \quad (1),$$

in Expression (1), 0 < a < 1 is established,

$$L_i 4 = L_i 2 + \Sigma_{k=1}^{j}(b_k \cdot L_i 3) \quad \cdots \quad (2),$$

in Expression (2), $0 \leq b_k \leq 1$ is established.

(12) The selection step is set as the final press step and the reference step is set as the first press step.

(13) The selected component shape has a shape in which the material flows from a plurality of directions on the outer periphery toward the center of the sheet in plan view when forming is performed by a single press step.

(14) The selected component shape has a shape including a top sheet portion and an endless annular side wall portion continuous to the entire outer periphery of the top sheet portion.

(15) In the forming surface of the die for each step above, a cross-sectional line length difference between the adjacent cross sections is equal to or less than the preset value.

EXAMPLES

A case of press forming a blank containing a metal sheet into a final component shape as illustrated in FIG. 2 for production was examined.

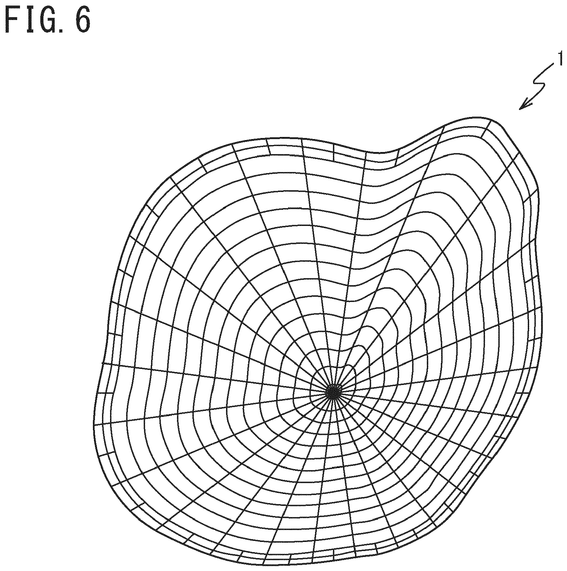

In Example 1 based on this embodiment, a preformed shape in a first press step was designed on the following conditions: Number of cross sections n = 24, Number of press steps m = 2, Coefficient a = 0.5, and Coefficient b = 0.9. The preformed shape is illustrated in FIG. 6. In this Example 1, the processing of the adjustment step (adjustment unit 13A) was omitted. In this example, the first press step has the drawing.

As the metal sheet, a GA steel sheet (alloyed hot dip galvanized steel sheet) with a material tensile strength of 270 MPa grade was used, and the thickness was set to 0.65 mmt.

When this metal sheet was press formed by two press steps using the die shape of the preformed shape, a good product free from cracks or wrinkles in the formation into the final component shape was able to be obtained.

On the other hand, when the blank was press formed into the final component shape by a single press step, a large crack was generated in a part of the side wall portion 1B, and thus the performance as a product was not satisfied.

As described above, by designing the preformed shape (die shape) in each step based on the present invention, it becomes possible to obtain a good product free from cracks or wrinkles.

The entire contents of JP 2020-147656 A (filed September 2, 2020), for which this application claims priority, form part of this disclosure by reference. Herein, the description is given with reference to a limited number of embodiments, but the scope of the invention is not limited thereto and modifications of each embodiment based on the disclosure above are obvious to those skilled in the art.

Reference Signs List

| | |
|---|---|
| 1 | selected component shape |
| 1A | top sheet portion |
| 1B | side wall portion |
| 6 | reference shape |
| 10 | cross section setting unit |
| 11 | required inflow amount arithmetic operation unit |
| 11A | line length calculation unit |
| 11B | inflow amount calculation unit |
| 12 | cross sectional component line length arithmetic operation unit |
| 12A | inflow amount distribution unit |
| 12B | cross sectional line length calculation unit |
| 13 | shape determination unit |
| 13A | adjustment unit |
| 13B | shape setting unit |
| $\alpha$ | axis |

**Claims**

1. A method for producing a pressed component for press forming a metal sheet into a final component shape through two or more press steps including a press step carried out by drawing,
the method for producing a pressed component comprising:

   determining an inflow amount of a material required for forming the metal sheet into the final component shape based on an increase in a cross-sectional line length of the final component shape with respect to a cross-sectional line length of the metal sheet before forming in the press forming of the metal sheet into the final component shape by a single press step; and
   distributing the determined inflow amount of the material to each step including a final press step, and determining a preformed shape after press forming in steps other than the final press step based on the distributed inflow amount.

2. A method for producing a pressed component for press forming a metal sheet into a final component shape through a plurality of press steps, wherein

   when one step is selected from the plurality of press steps and set as a selection step, a component shape obtained in the selection step is set as a selected component shape, one press step selected from the plurality of press steps and carried out before the selection step is set as a reference step, and a shape of the metal sheet before press forming in the reference step is set as a reference shape,
   the press steps from the reference step to the selection step include a press step having drawing,
   the method for producing a pressed component comprising:

      a cross section setting step of setting a plurality of cross sections by which the selected component shape is cut in a direction along a sheet thickness direction of the metal sheet before forming;
      an inflow amount calculation step of individually determining the inflow amount of a material required for forming the reference shape into the selected component shape based on a cross-sectional line length of the selected component shape cut by the cross section, a cross-sectional line length in the reference shape cut by a same cross section as the cross section, and a uniform elongation of the material of the metal sheet for each cross section;
      an inflow amount distribution step of distributing the determined inflow amount to each step from the reference step to the selection step for each cross section;
      a cross-sectional line length calculation step of individually calculating the cross-sectional line length for each cross section in each step from the reference step to a step one before the selection step based on the distributed inflow amount; and
      a shape determination step of determining a preformed shape after the press forming in each step from the reference step to the step one before the selection step based on the calculated cross-sectional line length.

3. The method for producing a pressed component according to claim 2, wherein
the selection step is the final press step and the reference step is a first press step.

4. The method for producing a pressed component according to claim 2 or 3, wherein

   the cross section setting step sets an axis crossing a direction in which the material mainly flows when the metal sheet of the reference shape is drawn into the selected component shape by a single step and extending in the direction along the sheet thickness direction and sets the plurality of set cross sections as cross sections cut by a plurality of planes containing the axis,
   the shape determination step has an adjustment step of adjusting a length of the cross-sectional line length for each cross section on a condition that a total sum of the cross-sectional line length for each cross section calculated in the cross-sectional line length calculation step is not changed for each step from the reference step to the step one before the selection step, and
   the shape determination step determines the preformed shape after the press forming based on the cross-sectional line length for each cross section after the adjustment in the adjustment step.

5. The method for producing a pressed component according to claim 4, wherein the adjustment step adjusts the cross-sectional line length based on a cross-sectional line length difference between adjacent cross sections.

**6.** The method for producing a pressed component according to any one of claims 2 to 5, wherein

when a number of the plurality of cross sections is defined as n, a subscript identifying each cross section is defined as i ($1 \leq i \leq n$), a line length in the selected component shape is defined as $L_i1$ and a line length in the reference shape is defined as $L_i2$, which are cut by the same cross section for each cross section, the uniform elongation of the material is defined as El, a number of the press steps from the reference step to the selection step is defined as m, and a subscript identifying the press step is defined as j ($1 \leq j \leq m$),
an inflow amount ($L_i3$) of the cross section i calculated in the inflow amount calculation step is determined by Expression (1) below,
a cross-sectional line length ($L_i4$) of the cross section i in a j-th step calculated in the cross-sectional line length calculation step is determined by Expression (2) below,
a coefficient a in Expression (1) sets an elongation degree of the material with respect to the uniform elongation of the material, a coefficient $b_k$ in Expression (2) sets an inflow degree of the material in the j-th step among all of m times of press steps, and the coefficient $b_k$ ($1 \leq k \leq m$) satisfies $\Sigma_{j=1}^{m}(b_k) = 1$,

$$L_i3 = L_i1 - L_i2 - a \cdot El \qquad \cdots \quad (1),$$

wherein $0 < a < 1$ is established,

$$L_i4 = L_i2 + \Sigma_{k=1}^{j}(b_k \cdot L_i3) \qquad \cdots \quad (2),$$

wherein $0 \leq b_k \leq 1$ is established.

**7.** The method for producing a pressed component according to any one of claims 2 to 6, wherein the selected component shape has a shape in which the material flows from a plurality of directions on an outer periphery toward a center of the sheet in plan view when forming is performed by a single press step.

**8.** The method for producing a pressed component according to claim 7, wherein the selected component shape has a shape including a top sheet portion and an endless annular side wall portion continuous to an entire outer periphery of the top sheet portion.

**9.** A method for designing a die used in press forming a metal sheet into a final component shape through two or more press steps including a press step carried out by drawing,
the method for designing a die comprising:

determining an inflow amount of a material required for forming the metal sheet into the final component shape based on an increase in a cross-sectional line length of the final component shape with respect to a cross-sectional line length of the metal sheet before forming in the press forming of the metal sheet into the final component shape by a single press step; and
distributing the determined inflow amount of the material to each step including a final press step, and determining a die shape used in steps other than the final press step based on the distributed inflow amount.

**10.** A method for designing a die used in press forming a metal sheet into a final component shape through a plurality of press steps, wherein

when one step is selected from the plurality of press steps and set as a selection step, a component shape obtained in the selection step is set as a selected component shape, one press step selected from the plurality of press steps and carried out before the selection step is set as a reference step, and a shape of the metal sheet before press forming in the reference step is set as a reference shape,
the press steps from the reference step to the selection step include a press step having drawing,
the method for designing a die comprising:

a cross section setting step of setting a plurality of cross sections by which the selected component shape is cut in a direction along a sheet thickness direction of the metal sheet before forming;
an inflow amount calculation step of individually determining the inflow amount of a material required for forming the reference shape into the selected component shape based on a cross-sectional line length of the selected component shape cut by the cross section, a cross-sectional line length in the reference shape cut by a same cross section as the cross section, and a uniform elongation of the material of the metal sheet for each cross section;

an inflow amount distribution step of distributing the determined inflow amount to each step from the reference step to the selection step for each cross section;

a cross-sectional line length calculation step of individually calculating the cross-sectional line length for each cross section in each step from the reference step to a step one before the selection step based on the distributed inflow amount; and

a shape determination step of determining a die shape used in each step from the reference step to the step one before the selection step based on the calculated cross-sectional line length.

**11.** The method for designing a die according to claim 10, wherein the selection step is a final press step and the reference step is a first press step.

**12.** The method for designing a die according to claim 10 or 11, wherein

the cross section setting step sets an axis crossing a direction in which the material mainly flows when the metal sheet of the reference shape is drawn into the selected component shape by a single step and extending in the direction along the sheet thickness direction and sets the plurality of set cross sections as cross sections cut by a plurality of planes containing the axis,

the shape determination step has an adjustment step of adjusting a length of the cross-sectional line length for each cross section on a condition that a total sum of the cross-sectional line length for each cross section calculated in the cross-sectional line length calculation step is not changed for each step from the reference step to the step one before the selection step, and

the shape determination step determines a preformed shape after the press forming based on the cross-sectional line length for each cross section after the adjustment in the adjustment step.

**13.** The method for designing a die according to claim 12, wherein the adjustment step adjusts the cross-sectional line length based on a cross-sectional line length difference between adjacent cross sections.

**14.** The method for designing a die according to any one of claims 10 to 13, wherein

when a number of the plurality of cross sections is defined as n, a subscript identifying each cross section is defined as i ($1 \leq i \leq n$), a line length in the selected component shape is defined as $L_i1$ and a line length in the reference shape is defined as $L_i2$, which are cut by the same cross section for each cross section, the uniform elongation of the material is defined as El, a number of the press steps from the reference step to the selection step is defined as m, and a subscript identifying the press step is defined as j ($1 \leq j \leq m$),

an inflow amount ($L_i3$) of the cross section i calculated in the inflow amount calculation step is determined by Expression (1) below,

a cross-sectional line length ($L_i4$) of the cross section i in a j-th step calculated in the cross-sectional line length calculation step is determined by Expression (2) below,

a coefficient a in Expression (1) sets an elongation degree of the material with respect to the uniform elongation of the material, a coefficient $b_k$ in Expression (2) sets an inflow degree of the material in the j-th step among all of m times of press steps, and the coefficient $b_k$ ($1 \leq k \leq m$) satisfies $\sum_{j=1}^{m}(b_k) = 1$,

$$L_i3 = L_i1 - L_i2 - a \cdot El \quad \cdots \ (1),$$

wherein $0 < a < 1$ is established,

$$L_i4 = L_i2 + \sum_{k=1}^{j}(b_k \cdot L_i3) \quad \cdots \ (2),$$

wherein $0 \leq b_k \leq 1$ is established.

**15.** The method for designing a die according to any one of claims 10 to 14, wherein the selected component shape has a shape in which the material flows from a plurality of directions on an outer periphery toward a center of the sheet in plan view when forming is performed by a single press step.

**16.** The method for designing a die according to claim 15, wherein the selected component shape has a shape including a top sheet portion and an endless annular side wall portion continuous to an entire outer periphery of the top sheet portion.

**17.** A method for producing a pressed component using the die designed by the method for designing a die according to any one of claims 9 to 16.

**18.** A die shape designing device for, in press forming a metal sheet into a final component shape through a plurality of press steps, determining a die shape of a die used in each step excluding a final press step, wherein

when one step is selected from the plurality of press steps and set as a selection step, a component shape obtained in the selection step is set as a selected component shape, one press step selected from the plurality of press steps and carried out before the selection step is set as a reference step, and a shape of the metal sheet before press forming in the reference step is set as a reference shape,
the press steps from the reference step to the selection step include a press step having drawing,
the die shape designing device comprising:

a cross section setting unit configured to set a plurality of cross sections by which the selected component shape is cut in a direction along a sheet thickness direction of the metal sheet before forming;
an inflow amount calculation unit configured to individually determine the inflow amount of a material required for forming the reference shape into the selected component shape based on a cross-sectional line length of the selected component shape cut by the cross section, a cross-sectional line length in the reference shape cut by a same cross section as the cross section, and a uniform elongation of the material of the metal sheet for each cross section;
an inflow amount distribution unit configured to distribute the determined inflow amount to each step from the reference step to the selection step for each cross section;
a cross-sectional line length calculation unit configured to individually calculate the cross-sectional line length for each cross section in each step from the reference step to a step one before the selection step based on the distributed inflow amount; and
a shape determination unit configured to determine the die shape in each step from the reference step to the step one before the selection step based on the calculated cross-sectional line length.

**19.** The die shape designing device according to claim 18, wherein the selection step is the final press step and the reference step is a first press step.

**20.** The die shape designing device according to claim 18 or 19, wherein

the cross section setting unit sets an axis crossing a direction in which the material mainly flows when the metal sheet of the reference shape is drawn into the selected component shape by a single step and extending in the direction along the sheet thickness direction and sets the plurality of set cross sections as cross sections cut by a plurality of planes containing the axis,
the shape determination unit has an adjustment unit configured to adjust a length of the cross-sectional line length for each cross section on a condition that a total sum of the cross-sectional line length for each cross section calculated by the cross-sectional line length calculation unit is not changed for each step from the reference step to the step one before the selection step, and
the shape determination unit determines the die shape based on the cross-sectional line length for each cross section after the adjustment by the adjustment unit.

**21.** The die shape designing device according to claim 20, wherein the adjustment unit adjusts the cross-sectional line length based on a cross-sectional line length difference between adjacent cross sections.

**22.** The die shape designing device according to any one of claims 18 to 21, wherein

when a number of the plurality of cross sections is defined as $n$, a subscript identifying each cross section is defined as $i$ ($1 \leq i \leq n$), a line length in the selected component shape is defined as $L_i 1$ and a line length in the reference shape is defined as $L_i 2$, which are cut by the same cross section for each cross section, the uniform elongation of the material is defined as $EI$, a number of the press steps from the reference step to the selection step is defined as $m$, and a subscript identifying the press step is defined as $j$ ($1 \leq j \leq m$),

an inflow amount ($L_i3$) of the cross section i calculated by the inflow amount calculation unit is determined by Expression (1) below,
a cross-sectional line length ($L_i4$) of the cross section i in a j-th step calculated by the cross-sectional line length calculation unit is determined by Expression (2) below,
a coefficient a in Expression (1) sets an elongation degree of the material with respect to the uniform elongation of the material, a coefficient $b_k$ in Expression (2) sets an inflow degree of the material in the j-th step among all of m times of press steps, and the coefficient $b_k$ ($1 \leq k \leq m$) satisfies $\sum_{j=1}^{m}(b_k) = 1$,

$$L_i3 \ = \ L_i1 \ - \ L_i2 \ - \ a \cdot El \qquad \cdots \ (1)$$

wherein $0 < a < 1$ is established,

$$L_i4 \ = \ L_i2 \ + \ \Sigma_{k=1}^{j}(b_k \cdot L_i3) \qquad \cdots \ (2),$$

wherein $0 \leq b_k \leq 1$ is established.

23. The die shape designing device according to any one of claims 18 to 22, wherein the selected component shape has a shape in which the material flows from a plurality of directions on an outer periphery toward a center of the sheet in plan view when forming is performed by a single press step.

24. The die shape designing device according to any claim 23, wherein the selected component shape has a shape including a top sheet portion and an endless annular side wall portion continuous to an entire outer periphery of the top sheet portion.

25. A die used in each step when a pressed component is produced by press forming a metal sheet into a final component shape through a plurality of press steps, wherein

one step is selected from the plurality of press steps and set as a selection step, a component shape obtained in the selection step is set as a selected component shape, one press step selected from the plurality of press steps and carried out before the selection step is set as a reference step, a shape of the metal sheet before press forming in the reference step is set as a reference shape, and the press steps from the reference step to the selection step include a press step having drawing,
for a forming surface of each die used in each step from the reference step to the selection step,
the forming surface of the die in the selection step has a shape following the selected component shape,
an axis is set which crosses a direction in which a material mainly flows when the metal sheet of the reference shape is drawn into the selected component shape by a single step using the die in the selection step and extends in a direction along the sheet thickness direction, and a plurality of cross sections cut by each of planes containing the axis is set,
for each cross section, each of the cross-sectional shapes cut by the plurality of cross sections in the forming surface of the die in each step is set from an inflow amount of the material set based on a cross-sectional line length of the selected component shape cut by the cross section, a cross-sectional line length in the reference shape cut by the same cross section as the cross section, and a uniform elongation of the material of the metal sheet,
when a number of the plurality of cross sections is defined as n, a subscript identifying each cross section is defined as i ($1 \leq i \leq n$), a line length in the selected component shape is defined as $L_i1$ and a line length in the reference shape is defined as $L_i2$, which are cut by the same cross section for each cross section, the uniform elongation of the material is defined as El, a number of the press steps from the reference step to the selection step is defined as m, and a subscript identifying the press step is defined as j ($1 \leq j \leq m$),
for the set inflow amount of the material, an inflow amount ($L_i3$) of the cross section i is set by Expression (1) below,
a cross-sectional line length ($L_i4$) of the cross section i in the forming surface of a die used in a j-th step is represented by Expression (2) below, and
a coefficient $b_k$ ($1 \leq k \leq m$) satisfies $\sum_{j=1}^{m}(b_k) = 1$,

$$L_i3 \ = \ L_i1 \ - \ L_i2 \ - \ a \cdot El \qquad \cdots \ (1),$$

wherein 0 < a < 1 is established,

$$L_i4 = L_i2 + \Sigma_{k=1}^{j}(b_k \cdot L_i3) \quad \cdots \quad (2),$$

wherein $0 \leq b_k \leq 1$ is established.

26. The die according to claim 25, wherein the selection step is the final press step and the reference step is a first press step.

27. The die according to claim 25 or 26, wherein the selected component shape has a shape in which the material flows from a plurality of directions on an outer periphery toward a center of the sheet in plan view when forming is performed by a single press step.

28. The die according to claim 27, wherein the selected component shape has a shape including a top sheet portion and an endless annular side wall portion continuous to an entire outer periphery of the top sheet portion.

29. The die according to any one of claims 25 to 28, wherein, in a forming surface of the die for each step, a cross-sectional line length difference between the adjacent cross sections is equal to or less than a preset value.

# FIG. 1

```
┌─────────────────────┐
│   CROSS SECTION     │───10
│   SETTING UNIT      │
└─────────────────────┘
          │
          ▼
┌─────────────────────────────────────┐───11
│ REQUIRED INFLOW AMOUNT              │
│ ARITHMETIC OPERATION UNIT          │
│  ┌───────────────────────────────┐ │
│  │ LINE LENGTH CALCULATION UNIT  │─┼─11A
│  └───────────────────────────────┘ │
│              │                      │
│              ▼                      │
│  ┌───────────────────────────────┐ │
│  │ INFLOW AMOUNT CALCULATION UNIT│─┼─11B
│  └───────────────────────────────┘ │
└─────────────────────────────────────┘
          │
          ▼
┌─────────────────────────────────────┐───12
│ CROSS-SECTIONAL COMPONENT LINE      │
│ LENGTH ARITHMETIC OPERATION UNIT   │
│  ┌───────────────────────────────┐ │
│  │ INFLOW AMOUNT DISTRIBUTION UNIT│─┼─12A
│  └───────────────────────────────┘ │
│              │                      │
│              ▼                      │
│  ┌───────────────────────────────┐ │
│  │ CROSS-SECTIONAL LINE LENGTH   │─┼─12B
│  │ CALCULATION UNIT              │ │
│  └───────────────────────────────┘ │
└─────────────────────────────────────┘
          │
          ▼
┌─────────────────────────────────────┐───13
│ SHAPE DETERMINATION UNIT            │
│  ┌───────────────────────────────┐ │
│  │ ADJUSTMENT UNIT               │─┼─13A
│  └───────────────────────────────┘ │
│              │                      │
│              ▼                      │
│  ┌───────────────────────────────┐ │
│  │ SHAPE SETTING UNIT            │─┼─13B
│  └───────────────────────────────┘ │
└─────────────────────────────────────┘
```

# FIG. 2

# FIG. 3

# FIG. 4

# FIG. 5

FIG. 6

## INTERNATIONAL SEARCH REPORT

International application No.

PCT/JP2021/026674

### A. CLASSIFICATION OF SUBJECT MATTER
Int. Cl. B21D22/00(2006.01)i, B21D22/26(2006.01)i
FI: B21D22/00, B21D22/26 C

According to International Patent Classification (IPC) or to both national classification and IPC

### B. FIELDS SEARCHED

Minimum documentation searched (classification system followed by classification symbols)
Int. Cl. B21D22/00, B21D22/26

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2015/004908 A1 (JFE STEEL CORP.) 15 January 2015 (2015-01-15), claims 1-18, fig. 1-15 | 1-29 |
| A | JP 2008-302405 A (HONDA MOTOR CO., LTD.) 18 December 2008 (2008-12-18), paragraphs [0012]-[0083], fig. 1-22 | 1-29 |
| A | JP 2017-182265 A (JSOL CORP.) 05 October 2017 (2017-10-05), paragraphs [0111]-[0115], fig. 28-32 | 1-29 |
| A | JP 2019-25509 A (JFE STEEL CORP.) 21 February 2019 (2019-02-21), paragraphs [0009]-[0031], fig. 1-9 | 1-29 |

☒ Further documents are listed in the continuation of Box C.          ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 06.09.2021 | 21.09.2021 |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**INTERNATIONAL SEARCH REPORT**

| International application No. |
|---|
| PCT/JP2021/026674 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2018/123989 A1 (NIPPON STEEL & SUMITOMO METAL CORP.) 05 July 2018 (2018-07-05), paragraphs [0010]-[0121], fig. 1-38 | 1-29 |
| A | JP 5911466 B2 (HONDA MOTOR CO., LTD.) 27 April 2016 (2016-04-27), paragraphs [0028]-[0077] | 1-29 |

Form PCT/ISA/210 (continuation of second sheet) (January 2015)

**INTERNATIONAL SEARCH REPORT**

Information on patent family members

| International application No. |
|---|
| PCT/JP2021/026674 |

| Patent Documents referred to in the Report | Publication Date | Patent Family | Publication Date |
|---|---|---|---|
| WO 2015/004908 A1 | 15.01.2015 | US 2016/0160311 A1 claims 1-16, fig. 1-15 EP 3020492 A1 CN 105451908 A KR 10-2016-0030975 A MX 2016000001 A | |
| JP 2008-302405 A | 18.12.2008 | US 2010/0089119 A1 paragraphs [0078]-[0258], fig. 1-48 GB 2455941 A CN 101522332 A | |
| JP 2017-182265 A | 05.10.2017 | (Family: none) | |
| JP 2019-25509 A | 21.02.2019 | (Family: none) | |
| WO 2018/123989 A1 | 05.07.2018 | EP 3560618 A1 paragraphs [0010]-[0129], fig. 1-38 CA 3046944 A1 KR 10-2019-0084073 A CN 110087790 A MX 2019007662 A BR 112019012411 A | |
| JP 5911466 B2 | 27.04.2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5867657 B
- JP 2007326112 A
- JP 2020147656 A